# FASCICULE DE BREVET EUROPEEN

(11) **EP 0 469 964 B1**
(45) Date de publication et mention de la délivrance du brevet: **05.10.1994**
(21) Numéro de dépôt: 91402064.9
(22) Date de dépôt: 24.07.1991
(51) Int. Cl.: F04D 13/14, F04D 13/04, F02K 9/48

(54) **Turbopompe pour comprimer simultanément deux fluides**
Turbopumpe zur gleichzeitigen Kompression von zwei Flüssigkeiten
Turbopump to simultaneously compress two fluids

(30) Priorité: 26.07.1990 FR 9009555
(43) Date de publication de la demande: 05.02.1992
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Mirville, François Jean-Pierre, F-77850 Hericy (FR)
(74) Mandataire: Berrou, Paul

(56) Documents cités:
- GB-A- 1 146 347
- US-A- 2 816 417
- US-A- 2 839 005

## Description

La présente invention concerne une turbopompe pour comprimer simultanément deux fluides au moyen de deux pompes centrifuges susceptibles de tourner à des vitesses différentes.

De nombreuses applications techniques nécessitent l'emploi simultané de deux pompes centrifuges pour la compression de deux fluides. Il en est ainsi, par exemple, pour l'alimentation de moteurs de fusée à ergols liquides. Ces applications nécessitent que le dimensionnement et la vitesse des deux pompes soient adaptés au type de fluide à comprimer et à l'augmentation de pression à réaliser, de manière à obtenir le meilleur rendement du système de compression de deux fluides pour un faible poids.

Il a déja été proposé de dimensionner les pompes pour qu'elles puissent être entraînées au même régime au moyen d'une turbine unique, les pompes et la turbine étant rendues solidaires par un arbre unique. Cette disposition n'est pas favorable au rendement global de l'ensemble du système, car le rendement de chacun des composants, pompes ou turbine, ne peut pas être optimisé par une adaptation du régime mécanique.

Il est également possible d'entraîner les deux pompes à des vitesses différentes par une turbine unique en interposant un réducteur de vitesse sur l'une des pompes. Cette solution présente l'inconvénient d'entraîner une augmentation de masse et d'encombrement, bien que cet inconvénient soit atténué par le fait que le réducteur est en général interposé sur la pompe qui a la plus faible puissance, et d'entraîner des vibrations supplémentaires lors du fonctionnement.

On a aussi déja proposé, notamment par le US-A 2 816 417 d'utiliser une turbine unique comportant deux rotors contrarotatifs respectivement reliés à chacune des pompes. Mais ces rotors de turbines sont équipées d'aubes ayant radialement deux étages alimentés de manière croisée par deux fluides moteurs. Une telle installation est relativement compliquée.

On peut évidemment entraîner chaque pompe par une turbine séparée, mais cette solution est défavorable du point de vue de la masse et de l'encombrement du système.

La présente invention permet de pallier ces inconvénients, elle concerne une turbopompe pour comprimer simultanément deux fluides, destinée notamment à alimenter un moteur fusée à ergols liquides, comportant une première et une deuxième pompes centrifuges disposées coaxialement, lesdites pompes présentant, chacune, un carter fixe et un rouet mobile susceptible de tourner autour de l'axe commun desdites pompes pour comprimer un ergol liquide qui pénètre dans ladite pompe par un orifice d'entrée prévu dans le carter et en sort, à l'état comprimé, par un collecteur de sortie ménagé dans le carter, caractérisé en ce que,
une turbine contrarotative coaxiale auxdites pompes est disposée entre celles-ci, ladite turbine présentant :
une enveloppe extérieure forment carter de turbine et reliant les carters fixes desdites pompes,
un rotor interne disposé à l'intérieur de ladite enveloppe près de l'axe commun desdites pompes et accouplé eu rouet de la première pompe, et
un rotor externe entourant le rotor interne à l'intérieur de ladite enveloppe et accouplé au rouet de la deuxième pompe,
lesdits rotors interne et externe délimitant entre eux un espace annulaire coaxial à l'axe commun desdites pompes et comportant, chacun, au moins un étage d'aubes qui s'étendent radialement dans ledit espace annulaire, les étages d'aubes de l'un desdits rotors alternant avec les étages d'aubes de l'autre desdits rotors dans la direction axiale de ladite turbine, et lesdits rotors étant susceptibles d'être entraînés en rotation grâce à la détente d'un troisième ergol gazeux pénétrant dans ledit espace annulaire par un canal d'alimentation d'ergol et s'en échappant par un collecteur d'échappement prévu dans ladite enveloppe.

Dans le cas où les deux pompes sont susceptibles de tourner à des régimes différents, la pompe destinée à tourner le plus vite est accouplée au rotor interne de la turbine contrarotative.

Le canal d'alimentation d'ergol de la turbine est prévu du côté de la deuxième pompe et le collecteur d'échappement est disposé du côté de la première pompe.

Le rotor interne est porté, en amont de l'espace annulaire, par une tige de support disposée dans l'axe des pompes, ladite tige de support étant reliée au rotor externe par une pluralité de bras de support radiaux, en forme d'ailettes, destinés à dévier le flux du troisième ergol circulant dans le canal d'alimentation d'ergol qui est coaxial auxdites pompes en amont desdits bras de support.

Un palier est interposé entre le rotor interne et ladite tige de support, et le rotor interne est positionné par rapport à la structure fixe, constituée par l'enveloppe de la turbine et les carters fixes des pompes, à l'aide d'un palier prévu au niveau de la première pompe.

De préférence, la canal d'alimentation d'ergol de la turbine traverse le rouet de la deuxième pompe et débouche sur le carter de celle-ci par un orifice axial.

Selon une variante, un collecteur annulaire d'entrée d'ergol gazeux, communiquant avec le canal d'alimentation d'ergol par des orifices prévus dans la paroi du rotor externe, est ménagé dans l'enveloppe de la turbine au voisinage de la deuxième pompe.

Le rotor externe est positionné par rapport à la structure fixe, constituée par l'enveloppe de la turbine et les carters des pompes, à l'aide de deux paliers disposés l'un au niveau de la deuxième pompe, l'autre au droit des bras de support.

Grâce à cette solution, on obtient de bons rendements pour le système global, car on peut adapter les régimes de rotation de chaque pompe au type d'ergol pompé et à la différence de pression à réaliser. De plus, l'absence de distributeurs à aubages fixes, entre les étages d'aubes mobiles de la turbine, améliore le rendement de la turbine contrarotative. L'absence de réducteur, résultant de la solution proposée, entraîne un gain en masse et en encombrement par rapport aux solutions connues.

Naturellement la dimensionnement de la turbine contrarotative et la géométrie des aubes mobiles sont calculés en fonction des puissances et vitesses respectives des deux pompes centrifuges et en fonction du fluice gazeux disponible pour actionner les rotors de la turbine.

D'autres caractéristiques et avantages de l'invention ressortiront à la lecture de la description suivante faite en référence aux dessins annexés dans lesquels :
- la figure 1 montre schématiquement une vue en coupe de la turbopompe de l'invention, selon un mode préféré de réalisation,
- la figure 2 montre, en coupe, une variante de la turbopompe de l'invention, dans laquelle la turbine comporte un collecteur annulaire d'entrée d'ergol gazeux,
- la figure 3 montre, an coupe, une deuxième variante de réalisation dans laquelle les deux pompes sont alimentées axialement,
- la figure 4 montre le diagramme des vitesses d'une aube de rotor interne, et
- la figure 5 montre le diagramme des vitesses d'une aube de rotor externe.

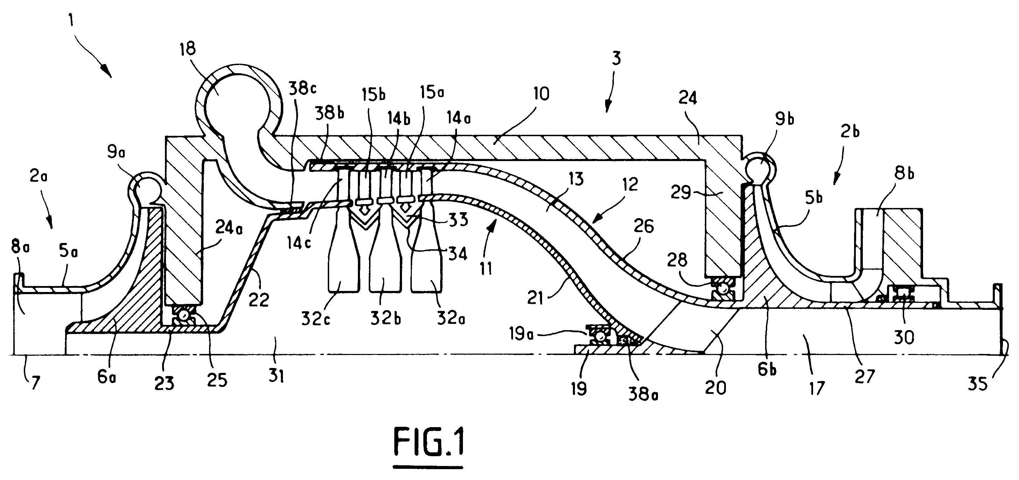

La figure 1 montre une turbopompe 1 destinée notamment à pomper simultanément deux ergols liquides pour alimenter un moteur fusée par exemple. La turbopompe 1 est constituée de deux pompes 2a et 2b centrifuges et coaxiales qui sont susceptibles d'être entraînées à des vitesses différentes par la même turbine contrarotative 3 coaxiale aux pompes 2a et 2b.

La première pompe centrifuge 2a comporte un carter extérieur fixe 5a et un rouet mobile 6a. Ledit rouet est disposé à l'intérieur du carter 5a et est susceptible de tourner autour de l'axe 7, commun aux deux pompes 2a et 2b et à la turbine 3, pour comprimer un premier ergol qui pénètre dans ladite pompe 2a par un orifice d'entrée 8a et en sort, à l'état comprimé, par un collecteur de sortie 9a ménagé dans le carter 5a.

De la même manière, la deuxième pompe centrifuge 2b comporte un carter extérieur fixe 5b et un rouet mobile 6b. Ce rouet 6b est disposé à l'intérieur du carter 5b et est susceptible de tourner autour de l'axe 7 pour comprimer un deuxième ergol qui pénètre dans ladite pompe 2b par un orifice d'entrée 8b et en sort, à l'état comprimé, par un collecteur de sortie 9b ménagé dans le carter 5b.

Les deux pompes centrifuges 2a et 2b sont disposées respectivement à chaque extrémité axiale de la turbine contrarotative 3.

La turbine contrarotative 3 comporte une enveloppe extérieure fixe 10 de forme sensiblement cylindrique, qui constitue le carter de la turbine 3 et qui relie les carters 5a et 5b des pompes centrifuges 2a et 2b. La turbine 3 comporte en plus deux rotors imbriqués 11 et 12 qui sont montés rotatifs autour de l'axe commun 7 à l'intérieur de l'enveloppe 10.

Le premier rotor 11, dit rotor interne, est disposé près de l'axe 7 et est accouplé à la première pompe 2a. Le deuxième rotor 12, dit rotor externe, entoure au moins partiellement le rotor interne 11 et est accouplé eu rouet 6b de le deuxième pompe 2b. Le rotor externe 12 délimite avec le rotor interne 11 un espace annulaire 13 coaxial à l'axe commun 7. Chaque rotor 11 et 12 comporte au moins un étage d'aubes, 14a pour le rotor interne 11 et 15a pour le rotor externe 12. Le nombre d'étages d'aubes de chaque rotor peut être supérieur à un, mais les nombres d'étages d'aubes des deux rotors 11 et 12 sont identiques ou ils diffèrent au plus d'une unité. Sur le figure 1 on voit que le rotor interne 11 comporte trois étages d'aubes 14a, 14b et 14c et le rotor externe 12 n'en comporte que deux référencés 15a et 15b.

Les étages d'aubes 14a, 14b, 14c du rotor interne 11 alternent avec les étages d'aubes 15a, 15b du rotor externe 12 le long de l'axe 7, et les aubes 16 de chaque étage d'aubes s'étendent radialement dans l'espace ennulaire 13 et sont régulièrement réparties angulairement dans cet espace 13.

Les rotors internes 11 et 12 sont susceptibles d'être entraînés en rotation autour de l'axe 7 par le détente d'un troisième ergol gazeux qui pénètre dans ledit espace annulaire 13 en passant par un canal d'alimentation d'ergol 17 situé du côté de le deuxième pompe 2b et s'en échappe par un collecteur d'échappement 18 prévu dans l'enveloppe 10 au voisinage de la première pompe 2a.

Le rotor interne 11 est centré sur le rotor externe 12 à l'aide d'une tige de support 19, avec interposition d'un palier à roulement à billes 19a, qui s'étend dans l'axe 7 de la turbine 3 et qui est reliée au rotor externe 12 par une pluralité de bras de support 20 radiaux en forme d'ailettes qui sont destinés à dévier le flux du troisième ergol pénétrant dans l'espace annulaire 13. Les bras de support 20 s'étendent radialement dans l'espace annulaire 13 et de préférence le diamètre moyen de cet espace annulaire 13 décroît du côté de l'entrée de l'ergol gazeux de façon à aboutir au canal d'alimentation d'ergol 17 qui se trouve dans l'axe 7 de le turbine 3 en amont des bras de support 20.

Le rotor interne 11 centré sur le rotor externe 12 par le palier à roulement à billes 19a est constitué, de manière connue, par une première virole 21 de forme conique disposée entre le palier 19a et le premier étage d'aubes 14a, et une deuxième virole 22 également de forme conique reliant le dernier étage d'aubes 14b à l'arbre 23 du rouet 6a de le première pompe 2a. Le rotor interne 11 est positionné par rapport à le structure fixe 24 de la turbopompe 1, structure fixe 24 constituée par les carters 5a et 5b et l'enveloppe 10, par un palier 25, comportant un roulement à billes, interposé entre l'arbre 23 du rouet 6a et une partie 24a de le structure fixe 24 formant un flasque latéral annulaire commun à la première pompe 2a et à la turbine 3.

De la même manière, le rotor externe 12 est constitué d'une troisième virole 26 de forme conique qui relie l'arbre 27 du rouet 6b au premier étage d'aubes 15a. Il est centré sur la structure fixe 24, d'une part, par un deuxième palier à roulement à billes 28 prévu au droit des bras de support 20, entre la troisième virole 26 et un deuxième flasque latéral annulaire 29 séparant la turbine 3 et la deuxième pompe 2b, et, d'autre part, par un troisième palier 30 à roulement à rouleaux interposé entre l'arbre 27 du rouet 6b et le corps fixe 5b de la deuxième pompe 2b.

La première virole 21 et la deuxième virole 22 délimitent autour de l'axe 7 un espace annulaire 31 de taille suffisante pour permettre de loger des disques de turbine 32a, 32b, 32c qui portent respectivement les étages d'aubes 14a, 14b et 14c. Ces disques 32a, 32b, 32c ont une taille suffisante pour résister à des forces centrifuges importantes résultant de la rotation à grande vitesse du rotor interne 11. C'est pourquoi la première pompe 2a accouplée au rotor fixe 11 est celle des deux pompes 2a et 2b qui tourne le plus vite. Deux disques consécutifs, 32a et 32b par exemple, sont reliés entre eux de manière connue, par des parois coniques délimitant avec l'espace annulaire 13 une zone annulaire 33 entourée par l'espace annulaire 13 et située au droit de l'étage d'aubes 15a correspondant, dans laquelle peut loger un disque annulaire 34 portant les aubes 16 de l'étage d'aubes 15a. L'espace annulaire 13 qui constitue la veine d'écoulement du troisième ergol est délimité de manière connue en tête et pieds d'aubes par des pièces complémentaires assurant la continuité de la veine et son étanchéité.

Pour la première pompe 2a, l'orifice d'entrée 8a du premier ergol est de préférence coaxial avec l'axe commun 7 des pompes 2a, 2b et de la turbine 3.

Le deuxième pompe 2b tourne beaucoup moins vite que le première pompe 2a aussi, comme on le voit sur la figure 1, le moyeu du rouet 6b peut être creux le long de l'axe 7 pour permettre le prolongement du canal d'alimentation d'ergol 17 qui débouche alors dans l'axe 7 de le turbopompe 1, par une ouverture 35 prévue dans le flasque latéral du carter 5b. Dans ce cas l'orifice d'entrée 8b du deuxième ergol comprimé par la deuxième pompe 2b est éloigné de l'axe 7 des pompes 2a et 2b.

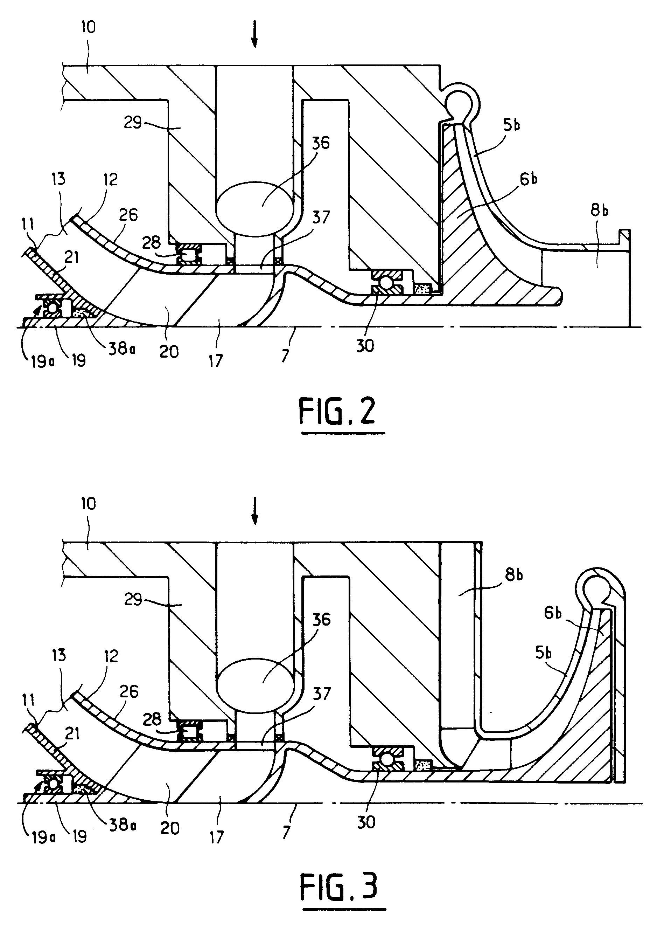

Lorsque l'ouverture maximale pouvant être pratiquée dans le moyeu du rouet 6b est insuffisante pour permettre un débit suffisant d'ergol gazeux dans l'espace annulaire 13 pour actionner les pompes 2a et 2b, une variante de construction, montrée sur les figures 2 et 3, prévoit un collecteur annulaire d'entrée d'ergol gazeux 36 dans l'enveloppe 10 de la turbine 3. Ce collecteur 36 communique avec le canal d'alimentation d'ergol 17 par des orifices 37 prévus dans le troisième virole 26 en amont des bras de support 20, avec interposition de joints d'étanchéité.

Des joints d'étanchéité 38a, 38b et 38c sont prévus respectivement entre la première virole 21 et la tige de support 19, entre l'extrémité aval du rotor externe 12 et l'enveloppe 10, ainsi qu'entre l'enveloppe 10 et la deuxième virole 22. Ces joints d'étanchéité sont destinés à rendre l'espace annulaire 13 étanche. Les pompes 2a et 2b sont également munies de joints d'étanchéité, non représentés sur le dessin, destinés à isoler les ergols comprimés par ces pompes et à empêcher des fuites vers l'intérieur de l'enveloppe 10.

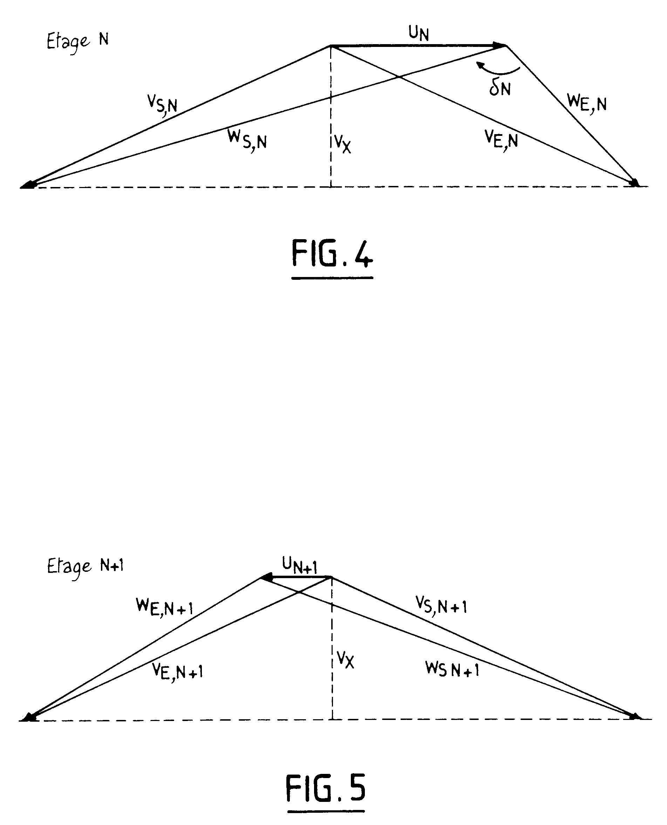

Les triangles de vitesse de deux étages d'aubes consécutifs 14a et 15a par exemple, sont montrés en exemple pour un type de turbine 3 donné sur les figures 4 et 5. Les vitesses tangentielles UN et UN+1 sont dans le rapport des régimes mécaniques des rotors 11 et 12, en considérant que les rayons moyens des deux étages 14a et 15a sont identiques. Pour chaque étage d'aubes 14a ou 15a, les triangles de vitesse sont symétriques pour les vitesses en entrée VE et en sortie VS. Les aubes 16 sont dessinées de telle manière que la vitesse axiale VX est maintenue constante sur l'ensemble des étages d'aubes.

Afin d'obtenir un rendement de turbine proche de l'optimum, la valeur de VX est choisie de façon à assurer aux rapports de la vitesse axiale VX et des vitesses tangentielles UN et UN+1 des valeurs placées de part et d'autre de le valeur 1. Dans l'exemple représenté par les figures 4 et 5, ce rapport peut être voisin de 0,77 pour l'étage d'aubes 14a et voisin de 2 pour l'étage d'aubes 15a. Le rapport des vitesses UN et UN+1 est quant à lui voisin de 3.

Les bras de support 20 solidaires du rotor externe 12 ont pour fonction aérodynamique d'orienter l'écoulement de l'ergol gazeux à l'entrée du premier étage d'aubes 14a, comme le ferait un distributeur d'entrée dans une turbine traditionnelle. Ces bras de support 20 étant voisins de l'axe 7 ils fournissent au rotor externe 12 une puissance très inférieure à celle fournie aux étages d'aubes 15a, 15b de ce rotor externe 12.

Nous avons spécifié que le nombre d'étages de chaque rotor peut être différent de l'unité. Ce nombre est calculé en fonction de l'ergol gazeux utilisé pour entraîner ces rotors 11 et 12. En particulier l'utilisation de l'hydrogène chaud à haute température en tant qu'ergol gazeux pour entraîner les rotors 11 et 12, permet d'obtenir une charge par étage d'aubes très supérieure à celle des autres fluides. Ceci permet de diminuer le nombre d'étages d'aubes pour un débit d'ergol et une puissance de turbine fixés.

La turbopompe 1 décrite ci-dessus est particulièrement adaptée pour alimenter un moteur fusée à ergols liquides, oxygène et hydrogène, avec cycle expander, dans lequel la turbine contrarotative est entraînée par de l'hydrogène chaud issu du circuit régénératif. Il va de soi que cette turbopompe 1 peut être utilisée pour comprimer d'autres fluides, liquides ou gazeux, et que la turbine 3 peut être entraînée par un fluide gazeux autre que de l'hydrogène.

## Revendications

1. Turbopompe pour comprimer simultanément deux fluides, destinée notamment à alimenter un moteur fusée à ergols liquides, comportant une première (2A) et une deuxième (2b) pompes centrifuges disposées coaxialement, lesdites pompes (2a, 2b) présentant chacune un carter fixe (5a, 5b) et un rouet mobile (6a, 6b) susceptible de tourner autour de l'axe commun (7) desdites pompes (2a, 2b) pour comprimer un ergol liquide qui pénètre dans ladite pompe (2a, 2b) par un orifice d'entrée (8a, 8b) prévu dans le carter (5a, 5b) et en sort, à l'état comprimé, par un collecteur de sortie (9a, 9b) ménagé dans le carter (5a, 5b),
caractérisé en ce que une turbine contrarotative (3) coaxiale auxdites pompes (2a, 2b) est disposée entre celles-ci, ladite turbine (3) présentant :
une enveloppe (10) extérieure formant carter de turbine et reliant les carters fixes (5a, 5b) desdites pompes (2a, 2b), un rotor interne (11) disposé à l'intérieur de ladite enveloppe (10) près de l'axe commun (7) desdites pompes (2a, 2b) et accouplé au rouet (6a) de la première pompe (2a) et un rotor externe (12) entourant le rotor interne (11) à l'intérieur de ladite enveloppe (10) et accouplé au rouet (6b) de la deuxième pompe (2b),
lesdits rotors interne (11) et externe (12) délimitant entre eux un espace annulaire (13) coaxial à l'axe commun (7) desdites pompes (2a, 2b) et comportant chacun au moins un étage d'aubes (14a, 15a) qui s'étendent radialement dans ledit espace annulaire (13), les étages d'aubes (14a, 14b, 14c) de l'un desdits rotors (11) alternant avec les étages d'aubes (15a, 15b) de l'autre desdits rotors (12) dans la direction axiale de ladite turbine (3), et lesdits rotors (11, 12) étant susceptibles d'être entraînés en rotation grâce à la détente d'un troisième ergol gazeux pénétrant dans ledit espace annulaire (13) par un canal d'alimentation d'ergol (17) et s'en échappant par un collecteur d'échappement (18) prévu dans ladite enveloppe (10).

2. Turbopompe selon la revendication 1 dans laquelle les deux pompes (2a, 2b) sont susceptibles de tourner à des régimes différents, caractérisée en ce que la pompe (2a) destinée à tourner le plus vite est accouplée au rotor interne (11) de la turbine contrarotative (3).

3. Turbopompe selon la revendication 2 caractérisée en ce que le canal d'alimentation d'ergol (17) de la turbine (3) est prévu du côté de la deuxième pompe (2b) et le collecteur d'échappement (18) est disposé du côté de la première pompe (2a).

4. Turbopompe selon la revendication 3 caractérisée en ce que le rotor interne (11) est porté, en amont de l'espace annulaire (13), par une tige de support (19) disposée dans l'axe (7) des pompes (2a, 2b), ladite tige de support (19) étant reliée au rotor externe (12) par une pluralité de bras de support (20) radiaux en forme d'ailettes destinés à dévier le flux du troisième ergol circulant dans le canal d'alimentation d'ergol (17) qui est coaxial auxdites pompes (2a, 2b) en amont desdits bras de support (20).

5. Turbopompe selon la revendication 4 caractérisée en ce qu'un palier (19a) est interposé entre le rotor interne (11) et ladite tige de support (19), et en ce que le rotor interne (11) est positionné par rapport à la structure fixe (24) constituée par l'enveloppe (10) de la turbine (3) et les carters fixes (5a, 5b) des pompes (2a,2b) à l'aide d'un palier (25) prévu eu niveau de la première pompe (2a).

6. Turbopompe selon l'une des revendications 4 et 5 caractérisée en ce que le canal d'alimentation d'ergol (17) de la turbine (3) traverse le rouet (6b) et la deuxième pompe (2b) et débouche sur le carter (5b) de celle-ci par un orifice axial (35).

7. Turbopompe selon l'une des revendications 4 et 5 caractérisée en ce qu'un collecteur annulaire d'entrée d'ergol gazeux (36) communiquant avec le canal d'alimentation d'ergol (17) par des orifices (37) prévus dans la paroi du rotor externe (12) est ménagé dans l'enveloppe (10) de la turbine (3) au voisinage de la deuxième pompe (2b).

8. Turbopompe selon l'une des revendications 4 à 7 caractérisée en ce que le rotor externe (12) est positionné par rapport à la structure fixe (24), constituée par l'enveloppe (10) de la turbine (3) et les carters (5a, 5b) des pompes (2a, 2b) à l'aide de deux paliers (28, 30) disposés l'un (30) au niveau de la deuxième pompe (2b), l'autre (28) au droit des bras de support (20).

## Claims

1. Turbopump for simultaneously compressing two fluids, the pump being intended particularly to supply a liquid-ergol rocket motor, including a first centrifugal pump (2a) and a second centrifugal pump (2b) which are located coaxially, the said pumps (2a, 2b) each exhibiting a fixed housing (5a, 5b) and a mobile impeller (6a, 6b) capable of rotating about the common axis (7) of the said pumps (2a, 2b) in order to compress a liquid ergol which penetrates into the said pump (2a, 2b) via an inlet orifice (8a, 8b) provided in the housing (5a, 5b) and leaves it, in the compressed state, via an outlet manifold (9a, 9b) formed in the housing (5a, 5b), characterized in that a contra-rotating turbine (3) which is coaxial with the said pumps (2a, 2b) is located between these, the said turbine (3) exhibiting:
an outer casing (10) forming a turbine housing and joining the fixed housings (5a, 5b) of the said pumps (2a, 2b), an internal rotor (11) located inside the said casing (10) close to the common axis (7) of the said pumps (2a, 2b) and coupled to the impeller (6a) of the first pump (2a) and an external rotor (12) surrounding the internal rotor (11) inside the said casing (10) and coupled to the impeller (6b) of the second pump (2b), the said internal rotor (11) and external rotor (12) between them delimiting an annular space (13) coaxial with the common axis (7) of the said pumps (2a, 2b) and each including at least one stage of blades (14a, 15a) which extend radially into the said annular space (13), the stages of blades (14a, 14b, 14c) of one of the said rotors (11) alternating with the stages of blades (15a, 15b) of the other of the said rotors (12) in the axial direction of the said turbine (3), and the said rotors (11, 12) being capable of being driven in rotation by virtue of the expansion of a third gaseous ergol penetrating into the said annular space (13) via an ergol-supply duct (17) and being exhausted therefrom via an exhaust manifold (18) provided in the said casing (10).

2. Turbopump according to Claim 1, in which the two pumps (2a, 2b) are capable of rotating at different speeds, characterized in that the pump (2a) intended to rotate the fastest is coupled to the internal rotor (11) of the contra-rotating turbine (3).

3. Turbopump according to Claim 2, characterized in that the ergol-supply duct (17) of the turbine (3) is provided on the same side as the second pump (2b) and the exhaust manifold (18) is located on the same side as the first pump (2a).

4. Turbopump according to Claim 3, characterized in that the internal rotor (11) is borne, upstream of the annular space (13) by a support rod (19) located along the axis (7) of the pumps (2a, 2b), the said support rod (19) being connected to the external rotor (12) by a plurality of fin-shaped radial support arms (20) intended to divert the flow of the third ergol flowing through the ergol-supply duct (17) which is coaxial with the said pumps (2a, 2b) upstream of the said support arms (20).

5. Turbopump according to Claim 4, characterized in that a bearing (19a) is interposed between the internal rotor (11) and the said support rod (19), and in that the internal rotor (11) is positioned with respect to the fixed structure (24) made up of the casing (10) of the turbine (3) and the fixed housings (5a, 5b) of the pumps (2a, 2b) with the aid of a bearing (25) provided level with the first pump (2a).

6. Turbopump according to one of Claims 4 and 5, characterized in that the ergol-supply duct (17) of the turbine (3) passes through the impeller (6b) of the second pump (2b) and emerges in the housing (5b) of the latter via an axial orifice (35).

7. Turbopump according to one of Claims 4 and 5, characterized in that an annular gaseous-ergol inlet manifold (36) communicating with the ergol-supply duct (17) via orifices (37) provided in the wall of the external rotor (12) is formed in the casing (10) of the turbine (3) close to the second pump (2b).

8. Turbopump according to one of Claims 4 to 7, characterized in that the external rotor (12) is positioned with respect to the fixed structure (24) made up of the casing (10) of the turbine (3) and the housings (5a, 5b) of the pumps (2a, 2b) with the aid of two bearings (28, 30) located, in the case of one of them (30), level with the second pump (2b) and, in the case of the other (28), in line with the support arms (20).

## Patentansprüche

1. Turbopumpe zum gleichzeitigen Komprimieren von zwei Fluiden, insbesondere für die Speisung eines Raketenmotors mit flüssigen Ergolen,
mit einer ersten und einer zweiten Zentrifugalpumpe (2b bzw. 2a), die koaxial angeordnet sind und jeweils ein feststehendes Gehäuse (5a, 5b) und eine bewegliche Scheibe (6a, 6b) aufweisen, die um die gemeinsame Achse (7) der Pumpen rotieren können, um ein Ergol zu komprimieren, das durch eine in dem Gehäuse (5a, 5b) vorgesehene Eintrittsöffnung (8a, 8b) in die jeweilige Pumpe (5a, 5b) eindringt und in komprimiertem Zustand aus dem Gehäuse (5a, 5b) durch eine in diesem angebrachte Ausgangssammelleitung (9a, 9b) austritt,
**dadurch gekennzeichnet,**
daß zwischen den Pumpen (2a, 2b) eine zu diesen koaxiale gegenläufige Turbine (3) angeordnet ist und daß diese Turbine (3) aufweist:
- eine das Turbinengehäuse bildende äußere Hülle (10) die die feststehenden Gehäuse (5a, 5b) der Pumpen (2a, 2b) miteinander verbindet,
- einen im Innern der Hülle (10) in der Nähe der gemeinsamen Achse (7) angeordneten inneren Rotor (11), der mit der Scheibe (6a) der ersten Pumpe (2a) gekuppelt ist,
- und einen äußeren Rotor (12), der im Inneren der Hülle (10) den inneren Rotor (10) umgibt und mit der Scheibe (6b) der zweiten Pumpe (2b) gekuppelt ist,
wobei der innere und der äußere Rotor (11 bzw. 12) zwischen sich einen zu der gemeinsamen Achse (7) der Pumpen (2a, 2b) koaxialen ringförmigen Zwischenraum (13) begrenzen und jeder von ihnen wenigstens eine Stufe von Schaufeln (14a, 14b) besitzt, die sich radial in diesen ringförmigen Zwischenraum (13) erstrecken, wobei die Schaufelstufen (14a, 14b, 14c) eines (11) der Rotoren mit den Schaufelstufen (15a, 15b) des anderen Rotors (12) in axialer Richtung der Turbine (3) abwechseln, und wobei die Rotoren (11. 12) durch das Entspannen eines gasförmigen dritten Ergols mit einer Rotationsbewegung antreibbar sind, das durch einen Ergol-Speisekanal (17) in den ringförmigen Zwischenraum (13) eindringt und durch eine in der genannten Hülle (10) vorgesehene Ausgangssammelleitung (18) aus ihm austritt.

2. Turbopumpe nach Anspruch 1, bei der die beiden Pumpen (2a, 2b) mit unterschiedlichen Drehzahlen rotieren können, dadurch gekennzeichnet, daß die Pumpe (2a), die am schnellsten rotieren soll, mit dem inneren Rotor (11) der gegenläufigen Turbine (3) gekuppelt ist.

3. Turbopumpe nach Anspruch 2, dadurch gekennzeichnet, daß der Ergol-Speisekanal (17) der Turbine (3) auf der Seite der zweiten Pumpe (2b) und die Ausgangssammelleitung (18) auf der Seite der ersten Pumpe (2a) angeordnet ist.

4. Turbopumpe nach Anspruch 3, dadurch gekennzeichnet, daß der innere Rotor (11) auf der stromaufwärtigen Seite des ringförmigen Zwischenraums (13) von einer Trägerstange (19) getragen wird, die in der Achse (7) der Pumpen (2a, 2b) angeordnet und mit dem äußeren Rotor (12) über mehrere radiale Trägerarme (20) in Form von Flügeln verbunden ist, die die Strömung des dritten Ergols umlenken sollen, das in dem Ergol-Speisekanal (17) zirkuliert, der stromaufwärts der genannten Trägerarme (20) koaxial zu den Pumpen (2a, 2b) angeordnet ist.

5. Turbopumpe nach Anspruch 4, dadurch gekennzeichnet, daß zwischen dem inneren Rotor (11) und der Trägerstange (19) ein Lager (19a) angeordnet ist, und daß der innere Rotor (11) relativ zu der aus der Hülle (10) und den feststehenden Gehäusen (5a, 5b) der Pumpen (2a, 2b) bestehenden festen Struktur (24) mit Hilfe eines in Höhe der ersten Pumpe (2a) vorgesehenen Lagers (25) positioniert ist.

6. Turbopumpe nach einem der Ansprüche 4 und 5, dadurch gekennzeichnet, daß der Ergol-Speisekanal (17) der Turbine (3) die Scheibe (6b) und die zweite Pumpe (2b) durchdringt und in einer axialen Öffnung (35) an deren Gehäuse (5b) mündet.

7. Turbopumpe nach einem der Ansprüche 4 und 5, dadurch gekennzeichnet, daß in der Hülle (10) der Turbine (3) nahe der zweiten Pumpe (2b) eine ringförmige Eingangssammelleitung (36) für gasförmiges Ergol angebracht ist, die über in der Wandung des äußeren Rotors (12) vorgesehene Öffnungen (37) mit dem Ergol-Speisekanal (17) in Verbindung steht.

8. Turbopumpe nach einem der Ansprüche 4 bis 7, dadurch gekennzeichnet, daß der äußere Rotor (12) relativ zu der aus der Hülle (10) und den feststehenden Gehäusen (5a, 5b) der Pumpen (2a, 2b) bestehenden festen Struktur (24) mit Hilfe zweier Lager (28, 30) positioniert ist, von denen das eine (30) in Höhe der zweiten Pumpe (2b) und das andere (28) im Bereich der Trägerarme (20) angeordnet ist.
